# EUROPEAN PATENT SPECIFICATION

(11) **EP 0 692 112 B1**
(45) Date of publication and mention of the grant of the patent: **06.11.1996**
(21) Application number: 94906506.4
(22) Date of filing: 03.01.1994
(51) Int. Cl.: G06F 9/44

(54) **DYNAMIC BROWSER SYSTEM**
DYNAMISCHES SCHNELLAUSWERTUNGSSYSTEM
SYSTEME DYNAMIQUE DE CONSULTATION RAPIDE

(30) Priority: 28.06.1993 US 85339
(43) Date of publication of application: 17.01.1996
(73) Proprietor: TALIGENT, INC., Cupertino, CA 95014 (US)
(72) Inventor: MCINERNEY, Peter, Joseph, Cupertino, CA 95014 (US); DANCE, John, R., Cupertino, CA 95014 (US); BIANCHI, Curtis, A., Saratoga, CA 95070 (US)
(74) Representative: Kindermann, Manfred
(86) International application number: US9400080
(87) International publication number: WO9500902

(56) References cited:
- SOFTWARE PRACTICE & EXPERIENCE vol. 20, no. 1 , January 1990 , CHICHESTER GB pages 67 - 77 XP95791 VACLAV RAJLICH ET AL. 'VIFOR: a tool for software maintenance'
- IEEE TRANSACTIONS ON SOFTWARE ENGINEERING vol. 14, no. 8 , August 1988 , NEW YORK US pages 1110 - 1115 XP120650 MARK EDEL 'The Tinkertoy graphical programming environment'
- IEEE WORKSHOP ON VISUAL LANGUAGES 10 October 1988 , IEEE, WASHINGTON, US pages 231 - 238 MARK E. KOPACHE ET AL. 'A mixed textual-graphical environment for C'

## Description

### BACKGROUND OF THE INVENTION

### Field of the Invention

The present invention generally relates to computer aided software engineering (CASE) and, more particularly, to human oriented object programming system (HOOPS) which provides an interactive and dynamic environment for computer program building. HOOPS allows a programmer to perform fine granularity source code editing in a computer program with an optimizing incremental compiler. The subject invention is a navigation system which provides a programmer with access to any stored information about any part of a program from wherever it is referenced in the program. This information is provided by means of a unique graphic user interface (GUI) that provides the programmer with an intuitive system for navigating through the program. The invention is disclosed in terms of a preferred embodiment which uses a popular object oriented programming (OOP) language, C++, but the principles are applicable to other computer programming languages both object oriented and procedural and may be used to build programs using both conventional and OOP languages.

### Description of the Prior Art

Object oriented programming (OOP) is the preferred environment for building user-friendly, intelligent computer software. Key elements of OOP are data encapsulation, inheritance and polymorphism. These elements may be used to generate a graphical user interface (GUI), typically characterized by a windowing environment having icons, mouse cursors and menus. While these three key elements are common to OOP languages, most OOP languages implement the three key elements differently.

Examples of OOP languages are Smalltalk, Object Pascal and C++. Smalltalk is actually more than a language; it might more accurately be characterized as a programming environment. Smalltalk was developed in the Learning Research Group at Xerox's Palo Alto Research Center (PARC) in the early 1970s. In Smalltalk, a message is sent to an object to evaluate the object itself. Messages perform a task similar to that of function calls in conventional programming languages. The programmer does not need to be concerned with the type of data; rather, the programmer need only be concerned with creating the right order of a message and using the right message. Object Pascal is the language used for Apple's Machintosh® computers. Apple developed Object Pascal with the collaboration of Niklaus Wirth, the designer of Pascal. C++ was developed by Bjarne Stroustrup at the AT&T Bell Laboratories in 1983 as an extension of C. The key concept of C++ is class, which is a user-defined type. Classes provide object oriented programming features. C++ modules are compatible with C modules and can be linked freely so that existing C libraries may be used with C++ programs. The most widely used object based and object oriented programming languages trace their heritage to Simula developed in the 1960s by O-J. Dahl, B. Myhrhaug and K. Nygrad of Norway further information on the subject of OOP may be had by reference to *Object Oriented Design with Applications* by Grady Booch, the Benjimin/Cummings Publishing Co., Inc., Readwood City, Calif. (1991).

The complete process of running a computer program involves translation of the source code written by the programmer to machine executable form, referred to as object code, and then execution of the object code. The process of translation is performed by an interpreter or a compiler. In the case of an interpreter, the translation is made at the time the program is run, whereas in the case of a compiler, the translation is made and stored as object code prior to running the program. That is, in the usual compile and execute system, the two phases of translation and execution are separate, the compilation being done only once. In an interpretive system, such as the Smalltalk interpreter, the two phases are performed in sequence. An interpreter is required for Smalltalk since the nature of that programming environment does not permit designation of specific registers or address space until an object is implemented.

A compiler comprises three parts; the lexical analyzer, the syntax analyzer, and the code generator. The input to the lexical analyzer is a sequence of characters representing a high-level language program. The lexical analyzer divides this sequence into a sequence of tokens that are input to the syntax analyzer. The syntax analyzer divides the tokens into instructions and, using a database of grammatical rules, determines whether or not each instruction is grammatically correct. If not, error messages are produced. If correct, the instruction is decomposed into a sequence of basic instructions that are transferred to the code generator to produce a low-level language. The code generator is itself typically divided into three parts; intermediate code generation, code optimization, and code generation. Basically, the code generator accepts the output from the syntax analyzer and generates the machine language code.

To aid in the development of software, incremental compilers have been developed in which the compiler generates code for a statement or a group of statements as received, independent of the code generated later for other statements, in a batch processing operation. The advantage of incremental compiling is that code may be compiled and tested for parts of a program as it is written, rather than requiring the debugging process to be postponed until the entire program has been written. However, even traditional incremental compilers must reprocess a complete module each time.

Optimizing compilers produce highly optimized object code which, in many cases, makes debugging at the source level more difficult than with a non-optimizing compiler. The problem lies in the fact that although a routine will be compiled to give the proper answer, the exact way it computes that answer may be significantly different from that described in the source code. Some things that the optimizing compiler may do include eliminating code or variables known not to affect the final result, moving invariant code out of loops, combining common code, reusing registers allocated to variables when the variable is no longer needed, etc. Thus, mapping from source to object code and vice versa can be difficult given some of these optimizations. Inspecting the values of variables can be difficult since the value of the variable may not always be available at any location within the routine. Modifying the values of variables in optimized code is especially difficult, if not impossible. Unless specifically declared as volatile, the compiler "remembers" values assigned to variables and may use the "known" value later in the code without rereading the variable. A change in that value could, therefore, produce erroneous program results.

While there have been many advances in the art of computer program building, testing and developing, the known software development tools still place a substantial burden on the programmer, often requiring insightful intuition. In addition, traditional batch oriented programming systems provide for very long edit-compile-test cycles which is very disruptive to the creative act of programming.

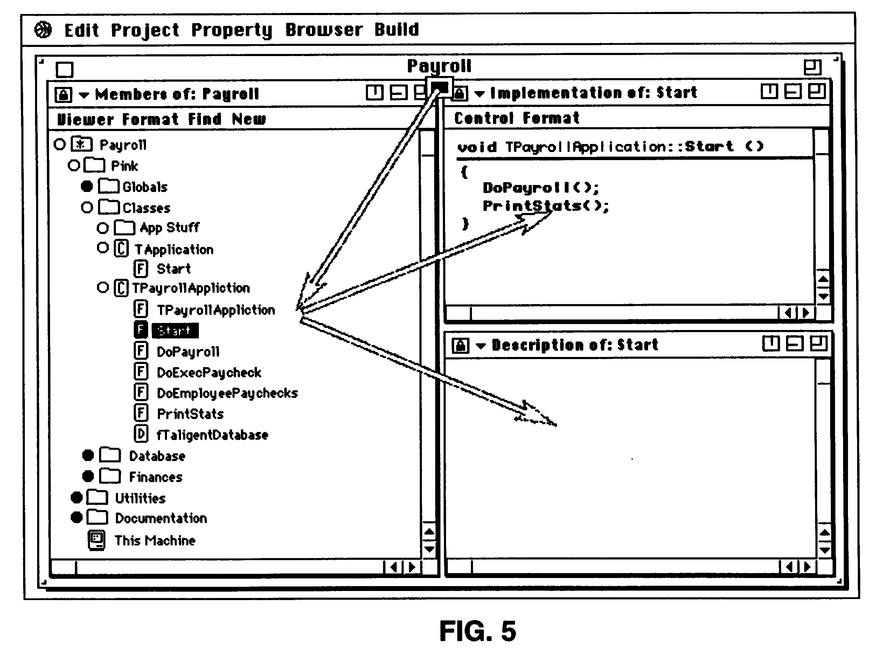

Considerable advances have been made in the development of intuitive graphic user interfaces (GUIs) for application programs, pioneered by Xerox's PARC Learning Research Group and the Apple Macintosh® and, more recently, with the introduction of Microsoft's Windows and IBM's OS/2. However, the program designer has not been provided with similar intuitive GUIs to aid in the basic task of program development, particularly as it applies to complex programs such as operating systems. An example of a recent tool for software maintenance is found in Software Practice & Experience, VIFOR: A Tool for Software Maintenance, vol. 20, no. 1, pp. 67-77 (1990). The article discusses a software tool oriented towards maintenance of medium-to-large Fortran77 programs. With VIFOR, programs can be displayed and edited in two forms: as the code and as the graph. VIFOR also contains transformations in both directions, i.e. from code to graph and from graph to skeletons to code. Hence it is suitable for re-engineering and maintenance of existing code. Specially designed browsers implement the graphical interface. VIFOR contains a database that is based on a simple but effective data model of Fortran programs. The model contains only four entity classes and three relations, which makes the tool small, and easy to implement and use. A simple query language allows browsing through the database, Figure 5 illustrates a fortran program corresponding to a fortran subroutine hash, said subroutine's name also illustrated in a hierarchial display presenting the other named routines constituting the program "main."

### SUMMARY OF THE INVENTION

It is therefore an object of the present invention to provide a human oriented, interactive and dynamic process for the building of computer programs which promotes better programmer focus and concentration, and hence greater productivity.

It is another object of the invention to provide a programmer with access to any stored information about any part of a program from wherever it is referenced in the program.

It is a further object of the invention to provide programmer with an intuitive graphic user interface which aids in the interactive and dynamic process of building computer programs.

According to the invention as defined by the appended claims, there is provided a system for navigating within a computer program. This is accomplished by first modeling the computer program as a collection of components and then storing the components in memory. The navigation function is performed by accessing the stored components based on the computer program. The system responds to a user selection of a portion of the program by displaying information associated with the computer program in a first pane on a display screen. A second pane is created and a default link is generated between the first pane and the second pane. This link, which can be displayed as a "wiring" diagram, provides an intuitive browsing function which aids the user in understanding the relationships of the various modules in the program.

The preferred embodiment of the invention is written in C++ and is used to build programs in C++, C and Assembler, these being the most popular languages currently in use. The programs built using the invention typically use all three of these languages. Thus, while the invention is itself an object oriented program written in an object oriented programming language, it is not limited to building programs in object oriented programming languages but is equally useful in building programs in procedural languages. Moreover, the invention is not limited to the C++ language, but may be implemented in other programming languages, and the invention is not limited in its application to these three languages; that is, the teachings of the invention may be used in a human oriented object programming system of more general application.

### BRIEF DESCRIPTION OF THE DRAWINGS

The foregoing and other objects, aspects and advantages will be better understood from the following detailed description of a preferred embodiment of the invention with reference to the drawings, in which:
Figure 1 is a pictorial diagram showing a general purpose computer system capable of supporting a high resolution graphics display device and a cursor pointing device, such as a mouse, on which the invention may be implemented;
Figure 2 is a block diagram of the general purpose computer system illustrated in Figure 1 showing in more detail the principle elements of the computer system;
Figure 3 is a data structure in accordance with a preferred embodiment; and
Figures 4-24 are pictorial representations of computer screens showing typical windows in accordance with a preferred embodiment.

### DETAILED DESCRIPTION OF A PREFERRED EMBODIMENT OF THE INVENTION

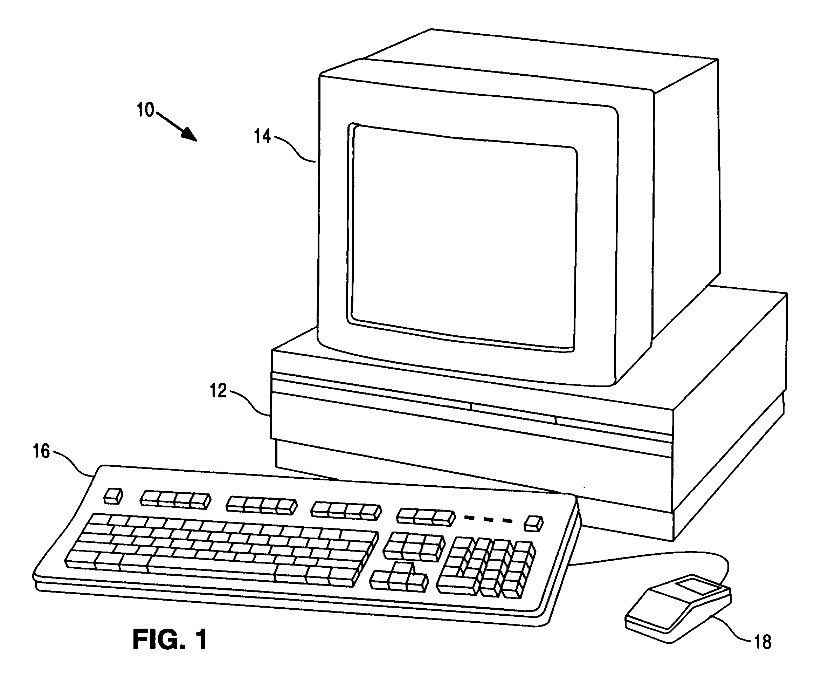

Referring now to the drawings, and more particularly to Figure 1, there is shown a general purpose computer 10. The computer 10 has a system unit 12 a high resolution display device 14, such as a cathode ray tube (CRT) or, alternatively, a liquid crystal display (LCD). The type of display is not important except that it should be a display capable of the high resolutions required for windowing systems typical of graphic user interfaces (GUIs). User input to the computer is by means of a keyboard 16 and a cursor pointing device, such as the mouse 18. The mouse 18 is connected to the keyboard 16 which, in turn, is connected to the system unit 12. Alternatively, the mouse 18 may be connected to a dedicated or serial port in the system unit 12. Examples of general purpose computers of the type shown in Figure 1 are the Apple Macintosh® (registered trademark of Apple Computer) and the IBM PS/2. Other examples include various workstations such as the IBM RISC System/6000 and the Sun Microsystems computers.

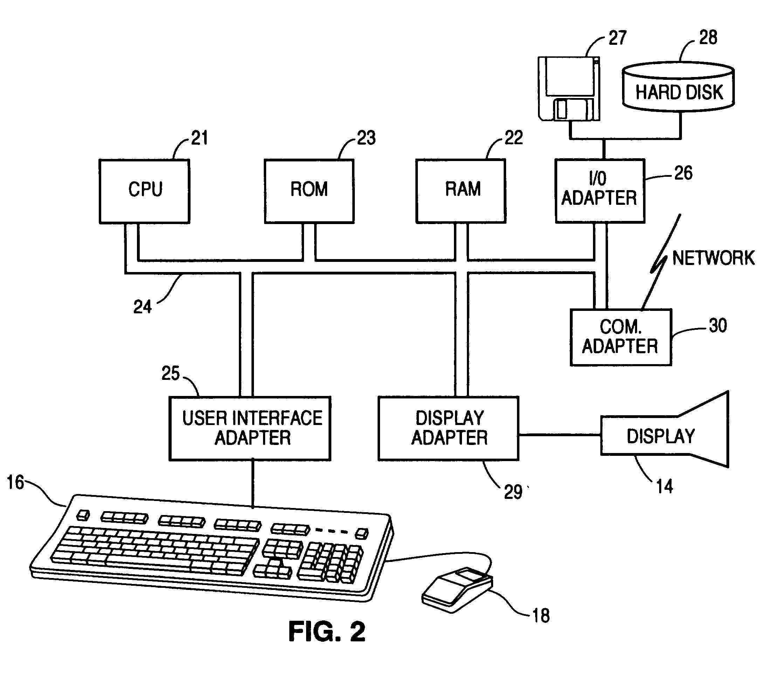

Figure 2 illustrates in more detail the principle elements of the general purpose computer system shown in Figure 1. The system unit 12 includes a central processing unit (CPU) 21, random access memory (RAM) 22, and read only memory (ROM) 23 connected to bus 24. The CPU 21 may be any of several commercially available microprocessors such as the Motorola 68030 and 68040 microprocessors commonly used in the Apple Macintosh® computers or the Intel 80386 and 80486 microprocessors commonly used in the IBM PS/2 computers. Other microprocessors, such as RISC (for reduced instruction set computer) microprocessors typically used in workstations, can also be used. The ROM 24 stores the basic microcode, including the basic input/output system (BIOS), for the CPU 21. The operating system (OS) for the computer system 10 may also be stored in ROM 24 or, alternatively, the OS is stored in RAM 22 as part of the initial program load (IPL). RAM 22 is also used to store portions of application programs and temporary data generated in the execution of the programs. The bus 24 may be the Apple NuBus®, the IBM MicroChannel® or one of the industry standards such as the ISA (industry standard adapter) or EISA (extended industry standard adapter) buses.

Also connected to the bus 24 are various input/output (I/O) adapters, including a user interface adapter 25 and an I/O adapter 26. The keyboard 16 is connected to the user interface adapter 25, and the I/O adapter 26 connects to a floppy disk drive 27 and a hard disk drive 28. The floppy disk drive 27 allows the reading and writing of data and programs to removable media, while the hard disk drive 28 typically stores data and programs which are paged in and out of RAM 22. The display device 14 is connected to the bus 24 via a display adapter 29. A communication adapter 30 provides an interface to a network. Other supporting circuits (not shown), in the form of integrated circuit (IC) chips, are connected to the bus 24 and/or the CPU 21. These would include, for example, a bus master chip which controls traffic on the bus 24. The bus 24 may, in some computers, be two buses; a data bus and a display bus allowing for higher speed display operation desirable in a graphic user interface.

### Overview of the Invention

The Human Oriented Object Programming System (HOOPS) according to the invention can be started on the computer by entering either a project name or an existing project name, depending on whether a new program is to be built or an existing program is to be edited. The initial window that HOOPS opens displays the Members property of the Project component and its immediate members. Although it initially only displays the immediate members, the same window is used to display every component starting at the project component.

The HOOPS dynamic browser system allows a user to build program presentations dynamically. The system is designed for quick, dynamic change or creation of presentations, and these presentations can be saved for reuse later. In this way users can tailor a system.

The system is based on four major components: viewers, panes, windows and wires. The system provides an extensible set of viewers for displaying various aspects of a program. To use a viewer, it must be displayed in a pane, which is displayed in a window. A window may display one or more panes (and therefore one or more viewers), and the panes may be connected via wires to provide navigation operations, such that a rich variety of combinations may be created. Because the set of viewers is extensible, the system imposes no inherent limit on the variety of presentations that may be created.

The system is applicable to any domain having a rich set of interrelated data, particularly hierarchical or networked in nature, such as the representation of a computer program. An example of another domain is a school database, where there are students, instructors, and classes, and various relationships among them.

### Definitions

### Program

As used in the description of the invention, a HOOPS program consists of one non-buildable component called the *Project* and a collection of "buildable components". It is also possible to store non-buildable components, but in this description, whenever an unqualified component is mentioned, what is meant is a "buildable component". Non-buildable components will not be compiled during a build operation.

### Component

A component has a unique identity and is named. Different components are distinguished by some form of unique Identifier called an *ID.* There is a distinguished ID called NullID which belongs to no component. The ID is assigned when a component is created and is never changed during the existence of the component. If a component is deleted, its ID is never reused. In practice, IDs are usually numerical.

A component also has a *name* which consists of a string of text containing no white space. There is no requirement that different components have different names. It is possible to obtain a list (possibly empty) of all components whose names match some given text string. A component's name may be changed any number of times during the existence of the component.

Components are used to represent semantic language elements. The way that this is done depends on the particular computer language being modeled. For example, in C++ a partial list of language elements represented by components includes global data, global functions, classes, data members, member functions, typedefs, enums, enumerators, macros, unions and structs. Typically, each semantic element will have an associated distinct kind.

### Properties

A component consists of a collection of named *properties.* A property represents some data associated with the component. It is possible to retrieve or store data given a component's ID and a property name. In practice, property names are usually internally represented by numbers identifying the names (such numbers are sometimes called tokens). There is a distinguished property name called *NullProperty* which belongs to no property.

The data associated with a given property is different for different components. Changing the data for a given property for one component does not imply changing the data for the same property of any other component. However, it is possible for a change in one property of a component to cause a change in another property of the same or another component.

All components must have the properties *Name* and *Container.* The Name property stores the component's name. The Container property contains a single reference in which the property name is NullProperty. Starting from any component and successively replacing it with the component referred to by its Container ID will always eventually result in the Project component. The Container ID of the Project is NullID. Thus, all components are described as being in the Project.

### Reference

A pair consisting of an ID and a property name is called a *reference.* A reference uniquely identifies a particular piece of property data. Often a reference is loosely used as though it were the component and/or property to which it refers. In practice, a reference typically contains other information which is not used directly in program building, identifying which version of the data and which subsection of the data in the property is being referenced. There is a distinguished reference, the null reference, which specifies no component or property.

### Kinds

Each component has a *kind.* A kind is a string of text which is used to classify components into groups sharing for example the same properties or the same language specific behavior. Most kinds are specific to a particular computer language and are used to designate semantically distinct language elements.

There are, however, some kinds defined by the system. These are the kinds *Project, Library* and *Container.* These kinds are only applied to non-buildable components. The Project kind is the kind of the Project component. The Library kind is applied to collections of components that are to be linked into a single external block of object code such as a shared library or application. The Container kind is applied to components which are used to group other components for organizational purpose. In practice, kinds are usually internally represented numerically.

### Viewer

A viewer is a graphical presentation intended to display a particular property of a component. However, in the process of displaying that property it may be necessary and desirable for the viewer to display ancillary information, including data from other properties. A viewer has an input, and an output, both of which are references. The input designates at least a component and property. It may additionally designate a subrange of the property's information. The output minimally designates a component. It may also designate a property, and a subrange of the property's information. The output typically changes over time in response to user actions and state changes within the system.

### Pane

A viewer is displayed within a pane. A pane has an input and output, both of which are references. The input designates a component at a minimum. It may also designate a property of the component, and a subrange of the property's information. The output designates a component at a minimum, and optionally a property and a subrange of the property's information. The output typically changes over time in response to user actions and state changes within the system.

A pane determines its viewer's input, generally by deriving it from the pane input. The nature of this derivation may vary from pane to pane, either dynamically based on system state, or statically by different implementations of panes. The preferred embodiment provides only the simplest derivation, in which a viewer's input is identical to the input of the pane. Similarly, a pane's output is derived from the output of the viewer. The nature of this derivation varies from pane to pane, either dynamically, based on system state, or statically by varying the implementations of panes. The preferred embodiment provides only the simplest derivation, in which a pane's output is identical to the output of it's viewer.

### Browser

A browser is a window that displays one or more panes. The layout and number of panes in a window can be dynamically controlled by a user. A browser has an input, which is a reference. The browser's input serves as the input to the browser's first pane, which is typically the pane occupying the upper-left corner of the browser.

### Wire

A wire is a connection between two panes. The purpose of a wire is to permit the output of one pane to control the input of another pane. Like panes and viewers, a wire has an input and output, which are references. To create a connection between two panes, the output of one pane is connected to the input of a wire. The output of the same wire is connected to the input of the second pane, thereby establishing the connection.

A wire derives its output from its input. The nature of this derivation may vary from wire to wire, either dynamically based on system state, or statically by different implementations of wires.

A wire may transform its input before passing it on as the wire's output. There may be different implementations of wires used to establish connections, and each implementation may incorporate a different kind of transformation. The preferred embodiment provides only the simplest derivation, in which the wire's input passes unchanged through the wire to its output. The output of a pane may be connected to any number of wires. This provides a mechanism in which the output of a single pane "controls" the input of any number of other panes. A user can dynamically control the connections between panes.

### Property to Viewer Linkage

To facilitate different displays of the same property, and to permit the use of the same viewer implementations for different properties, the system provides a mechanism for associating properties to viewers.

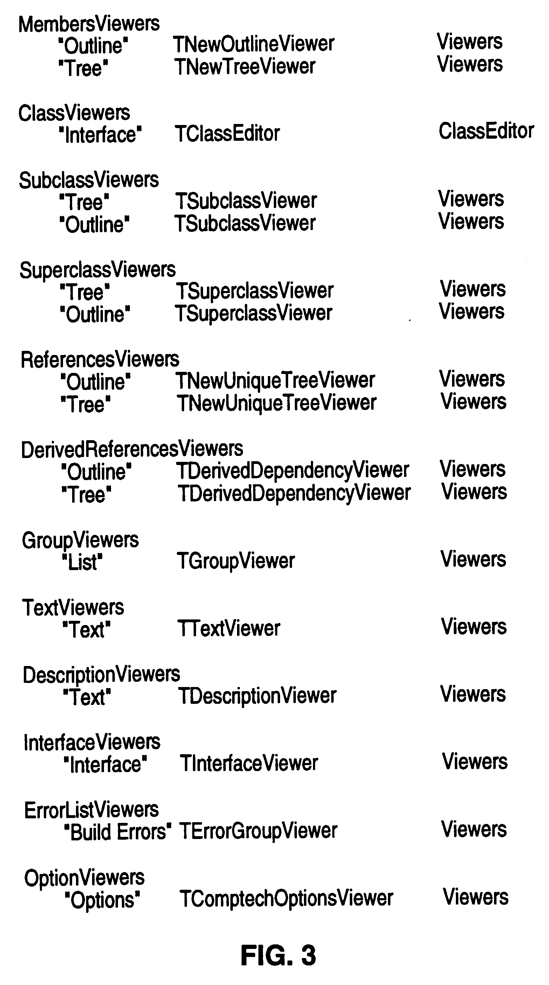

In a preferred embodiment this linkage is accomplished by a set of viewer lists, each of which may be associated with any number of properties. A viewer list is a named list of viewer specifications, where each specification defines a viewer name and implementation class. Figure 3 illustrates a simplified version of the viewer lists in the preferred embodiment. The first list is named "MembersViewers." It contains specifications for two viewers. The first is called "Outline," and is implemented by the TNewOutlineViewer class in the Viewers library. The second specification in the list is called "Tree" and is implemented by the TNewTreeViewer class in the Viewers library.

Each property is associated with a single viewer list. For example, the table below shows the properties of a Project component, and the viewer lists associated with each property.

| | |
|---|---|
| Property | Viewer List |
| Members | MembersViewers |
| Description | DescriptionViewers |
| Macro Changes | GroupViewers |
| Interface Changes | GroupViewers |
| Implementation Changes | GroupViewers |
| Build Errors | ErrorListViewers |
| Components Built | GroupViewers |
| Compilers | |
| Clients | DerivedReferencesViewers |
| References | DerivedReferencesViewers |

In this example the Members property can be displayed by the viewers specified in the MembersViewers list. Referring to Figure 3, the MembersViewers list contains two viewers, the Outline viewer and the Tree viewer. Therefore, the Members property of a Project component can be displayed by either the Tree viewer or Outline viewer.

The table also shows that some properties are associated with the same viewer list, illustrating that the same viewers can be used for different properties. The Compilers property has no viewer list associated with it, indicating that the Compilers property cannot be displayed at all. The first property in the table is considered the component's default property, which is used when determining which property and viewer to display in a pane.

### Procedures

Following is a description of the essential procedures of the browser system.

### Procedure A: Setting a Pane's Viewer

### Given: A viewer name

1. Search for the viewer name in the viewer list associated with the displayed property.
2. If the viewer name is found, go to step 5.
3. The viewer name was not found. Make the pane empty.
4. Go to step 8.
5. Instantiate a viewer of the class associated with the viewer name in the viewer list.
6. Set the viewer's input to the pane's input.
7. Install the viewer in the pane and display it.
8. End of procedure.

### Procedure B: Setting a Pane's Property

### Given: A property name

1. Set the pane's property name to the given property name.
2. Update the pane's title bar to show the given property name.
3. Obtain the property of the given name from the pane's input component.
4. Obtain the property's viewer list.
5. If there is only one viewer in the list, go to step 7.
6. Construct the Viewer menu by creating a menu item for each entry in the viewer list.
7. Invoke Procedure A to set the pane's viewer, using the first viewer name from the viewer list.
8. End of procedure.

### Procedure C: Setting a Pane's Input

### Given: A reference

1. If the reference is not the null reference, go to step 3.
2. The reference is null. Set the pane to the empty state. Go to step 12.
3. Set the component name in the pane title bar to the component designated by the reference.
4. Fill the Property pop-up menu with the names of the properties of the component designated by the reference.
5. If the pane is property locked, go to step 9.
6. If the reference does not specify a property, skip to step 8.
7. The reference specifies a property. Invoke Procedure B to set the pane's property to the reference's property. Go to step 12.
8. The reference does not specify a property. Obtain the component designated by the reference, and invoke Procedure B to set the pane's property to the component's default property. Go to step 12.
9. The pane is property locked. Obtain the component designated by the reference. If the component does not have the pane's property, go to step 11.
10. The component has the locked property. Invoke Procedure B to set the pane's property to the locked property. Go to step 12.
11. The component does not have the locked property. No viewer is installed in the pane.
12. End of Procedure.

### Procedure D: Setting a Viewer's Output

### Given: The viewer determines that some action, typically initiated by the user, requires the viewer's output to change.

1. Construct a reference representing the viewer's new output.
2. Invoke Procedure E to set the pane's output.
3. End of procedure.

### Procedure E: Setting a Pane's Output

### Given: A reference representing the output of the pane's viewer.

1. Transform the viewer's output into the pane's output. (In the simplest case both outputs are the same.)
2. For each wire connected to the pane's output, invoke Procedure F to set the wire's input to the pane's output.
3. End of procedure.

### Procedure F: Setting a Wire's Input

### Given: A reference.

1. Transform the given reference into the wire's output. (In the simplest case the output is the same as the given reference.)
2. Invoke Procedure C to set the input of the pane connected to the wire's output.
3. End of Procedure.

### Procedure G: Connecting Two Panes

### Given: An input pane and an output pane

1. Create a new wire.
2. Add the wire to the output pane's set of wires.
3. Connect the wire to the input pane.
4. Set the wire's input using Procedure F.
5. End of Procedure.

### Procedure H: Splitting a Pane

### Given: The dimensions of the new pane

1. Create a new pane object.
2. Set the new pane's dimensions to those given.
3. Set the existing pane's dimensions to make room for the new pane.
4. Connect the existing pane to the new pane using Procedure G.
5. End of procedure.

### Procedure I: Creating a Browser

### Given: A reference serving as the input for the browser

1. Create the browser object.
2. Set the browser's input to the given reference.
3. Create a new pane object, whose dimensions fill the browser.
4. Set the pane's input to the browser's input using Procedure C.
5. End of Procedure.

### Human Interface Controls

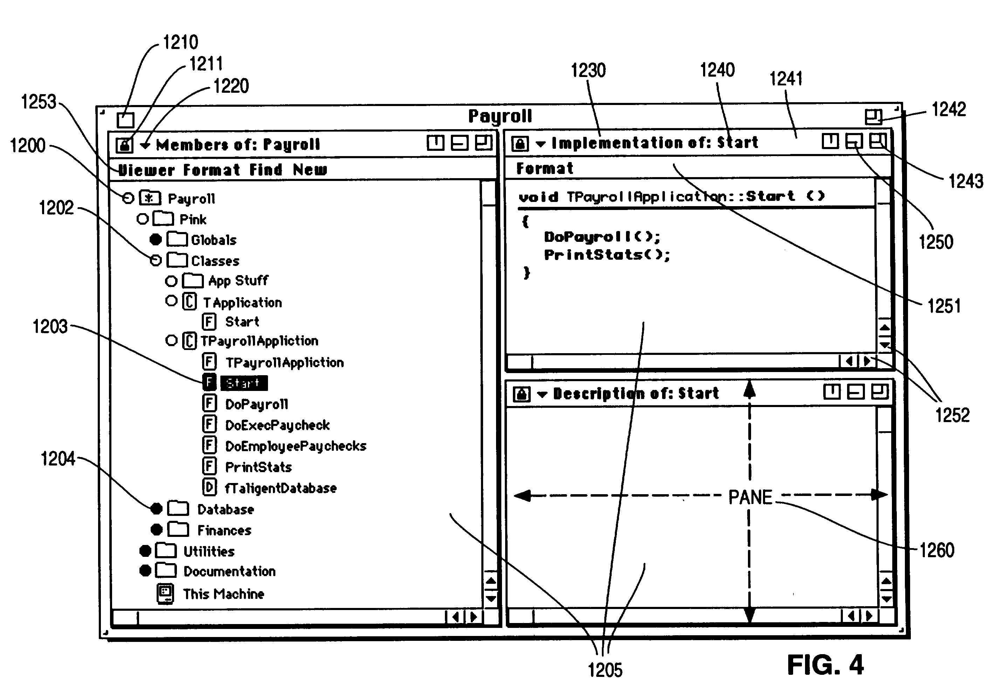

Figure 4 illustrates a browser in accordance a preferred embodiment. There are specific controls for each browser, each pane, and each viewer.

Each browser has the following controls. The close icon 1210 can be used to close the window at any time. Any changes made to the Project while in the browser are automatically saved. The browser zoom box 1242 permits the user to zoom the browser to the full dimensions of the screen.

Each pane has the following controls. The pane title bar 1240 indicates the name of the property displayed in the pane 1230, and the name of the component displayed 1240. The pane splitters 1250 permit a user to split a pane into two panes, and to control the dimensions of a pane. The pane zoom box 1243 permits a user to dynamically zoom a pane to completely fill a window, or to unzoom a zoomed pane back to its original dimensions. The property pop-up menu 1220 allows a user to select any property of the input component 1240, thereby changing the property displayed in a pane. The pane property lock 1211 allows the user to lock a pane to a particular property regardless of the input to the pane. Horizontal and vertical scroll controls 1252 permit a user to scroll the contents of a viewer within a pane. The viewer menu bar 1251 contains menus applicable to the viewer displayed in a pane. In particular, if the property displayed in the pane can be displayed by more than one viewer, then the viewer menu bar contains a Viewer menu 1253 which can be used by a user to select among the viewers used to display the property.

There are also controls for establishing connections among panes. When a new pane is created, a default connection is established from the pane being split to the new pane. To change the connections, a preferred embodiment superimposes graphical wires on a browser as shown in Figure 5, and a user may draw new wires to change the pane connections. In Figure 5, the browser's input is connected to the left pane's input, and the left pane's output is connected to the input of both panes on the right. The output of the panes on the right are not connected to any pane. To change the connections, say by connecting the output of the upper right pane to the input of the lower right pane, a user would simply draw a new wire from the upper right pane to the lower right pane.

### Browser System Scenarios

The following scenarios show how the dynamic browser system can be used in practice, using a program based on the well-known computer science problem called Towers of Hanoi.

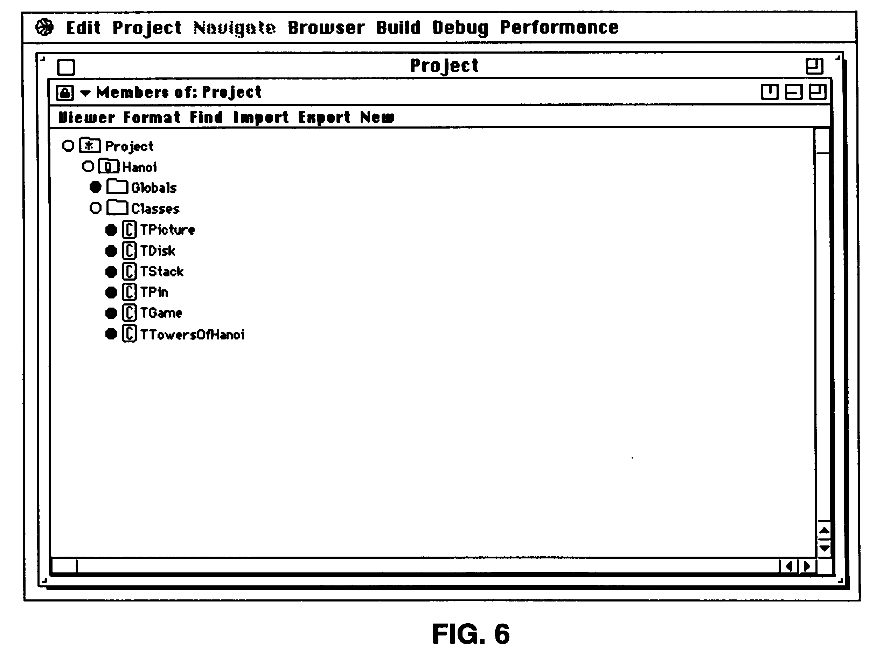

Figure 6 shows a browser containing a single pane, as might be displayed after opening the Towers of Hanoi programming project. The viewer shows the hierarchy of components in the project, where each component is represented by an icon and its name. Some parts of the hierarchy are collapsed in order to show only those components of current interest. The browser was created using Procedure I, with a reference to the Project component as input. Procedure I invoked Procedure C to set the pane's input to the Project component. Procedure C in turn invoked procedure B to set the pane's property. Since the reference to Project did not specify a property, the default property Members (a tree data structure) was used. Finally, Procedure B invoked Procedure A to set the pane's viewer. The Members property viewer list contains two viewers, Tree and Outline. Therefore the Viewers menu was constructed with entries for each viewer, and the first viewer in the list (Outline) was displayed.

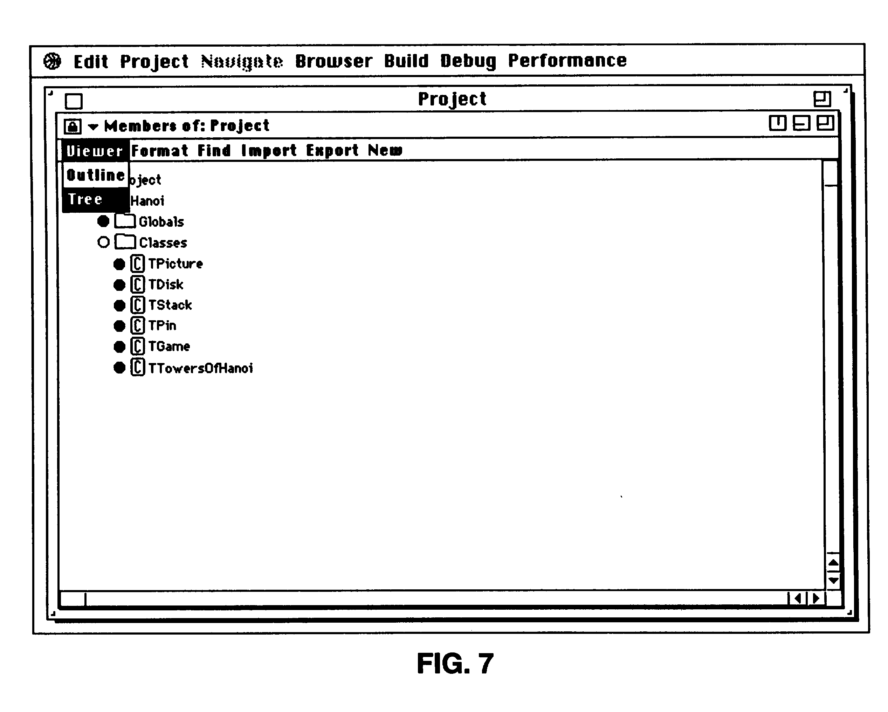

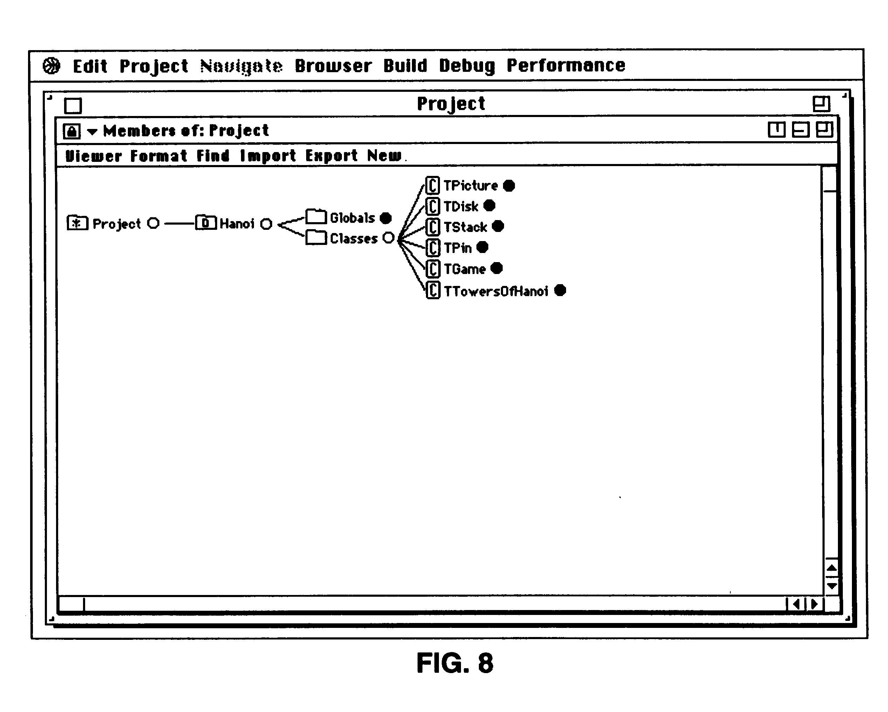

In Figure 7 the Viewers menu is opened, showing that the Members property can be displayed by two viewers, named Tree and Outline. Selecting the Tree menu item invokes Procedure A, replacing the Outline viewer with the Tree viewer, and the result is shown in Figure 8.

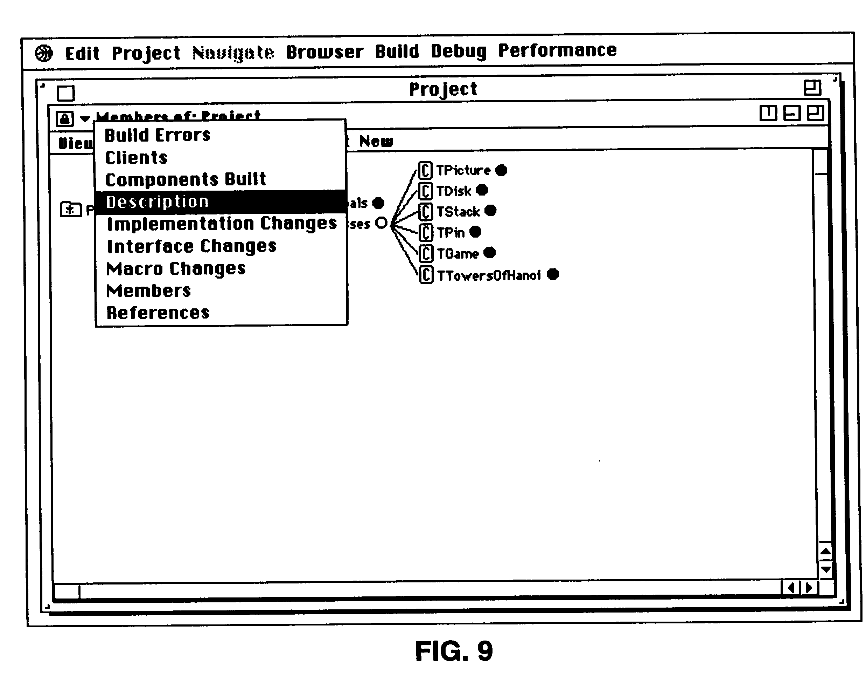

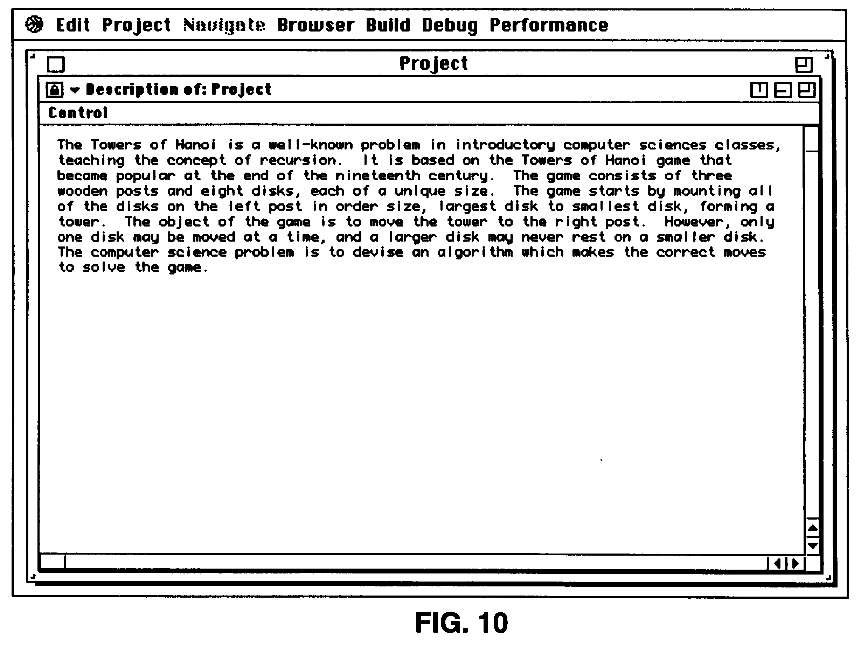

In Figure 9 the Properties pop-up menu is opened, showing the displayable properties of the Project component, as obtained by Procedure C. Figure 10 shows the result after selecting the Description item in the pop-up menu. This invokes Procedure B to display the Description property of the Project component. There is only one viewer for the Description property, so there is no need for the Viewers menu.
Assume the user has reset the property back to the Members property resulting in Figure 6 once again.

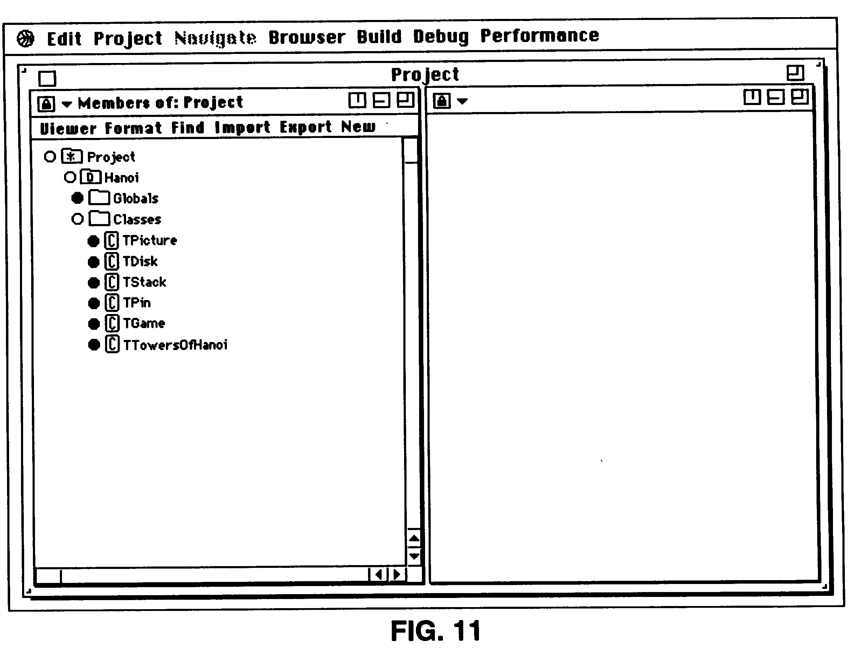

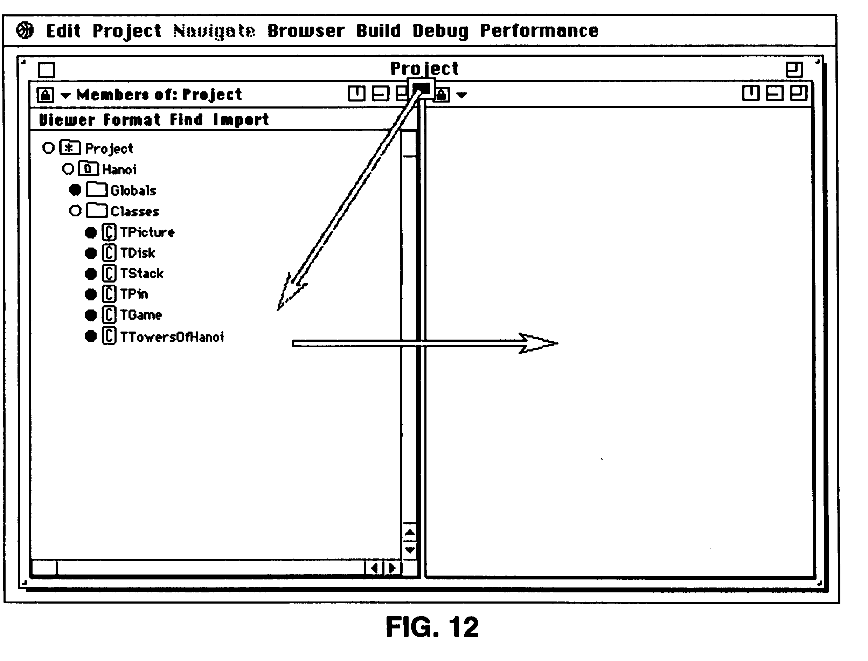

Figure 11 shows the result after the user has split the pane into two panes using the vertical pane splitter control, accomplished with Procedure H. The right pane's input is connected to the left pane's input, as shown graphically by the arrow in Figure 12. Because the output of the left pane is a null reference, the input of the new pane is also a null reference, and according to Procedure C, results in an empty pane.

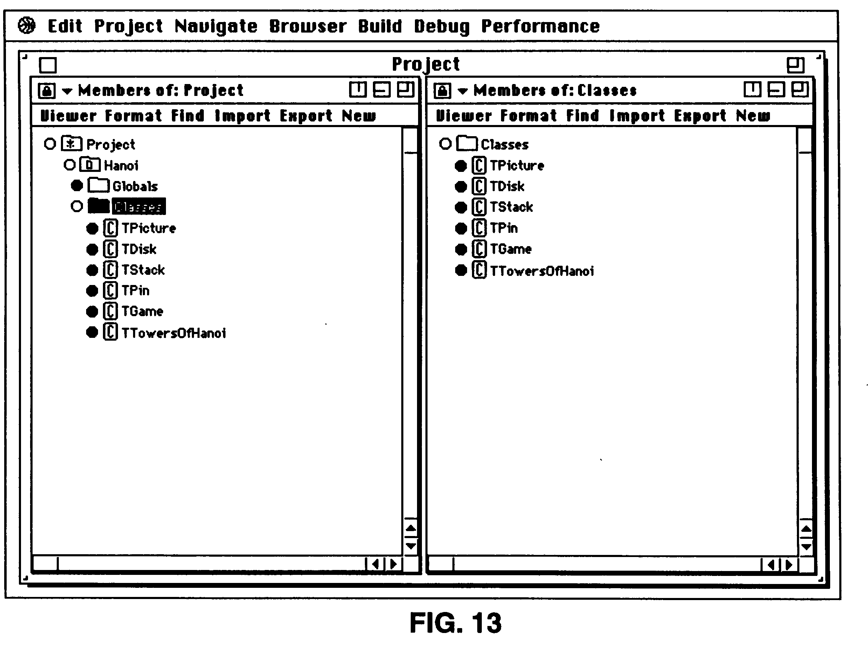

Figure 13 shows the results after the user selects the icon representing the Classes component in the left viewer. This causes the left viewer to generate a new output, a reference to the Classes component. Procedure D is invoked to handle the new output, and it invokes Procedure C to set the right pane's input to the reference to Classes. Since the reference doesn't specify a property, Procedure B is invoked using Classes' default property Members. The Members property has two viewers, Outline and Tree, so Procedure B constructs a Viewers menu and invokes Procedure A on the first viewer, the Outline viewer.

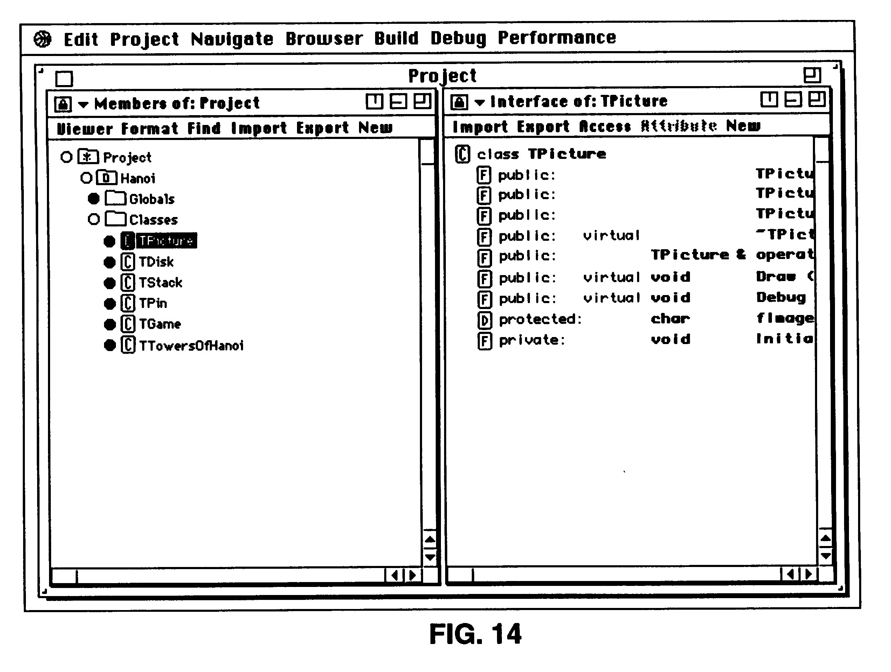

Figure 14 shows the results after the user selects the icon representing the TPicture component in the left viewer. This changes the left viewer's output to a reference to the TPicture component. Procedure D is once again invoked, and it invokes Procedure C to set the right pane's input to the reference to TPicture. Again, the reference doesn't specify a property so Procedure C invokes Procedure B using TPicture's default property, named Interface. There is only one viewer for this property, so no Viewer menu is created and the viewer is displayed using Procedure A.

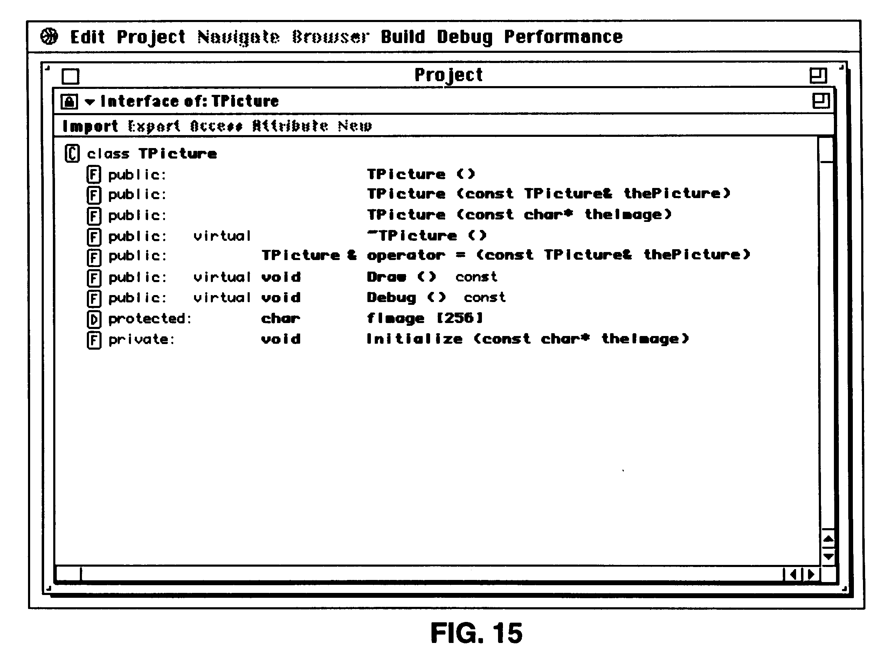

Figure 15 shows the result after the user clicks on the right pane's zoom control. The pane now fills the entire browser. Clicking on the zoom control returns the display to that shown in Figure 14.

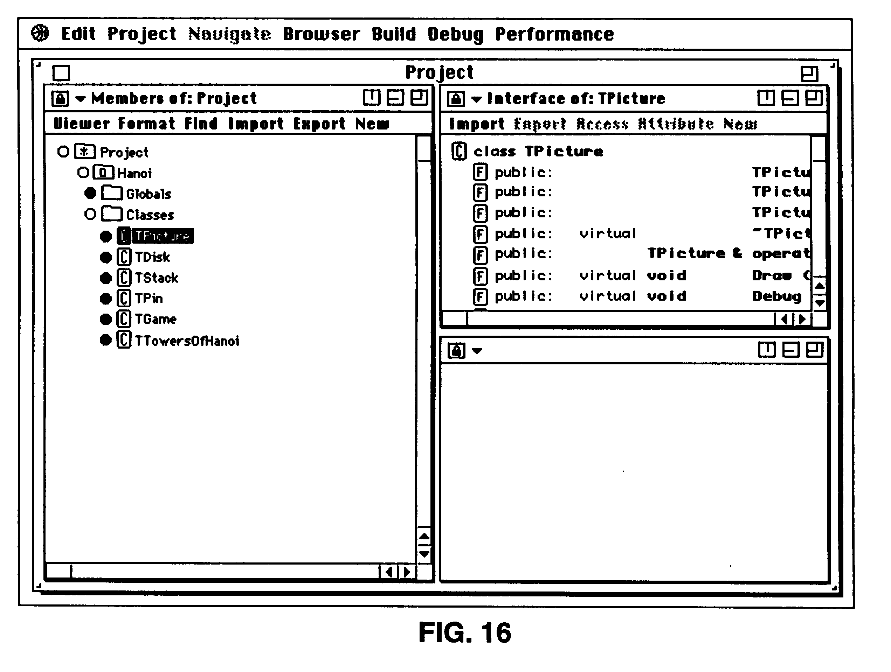

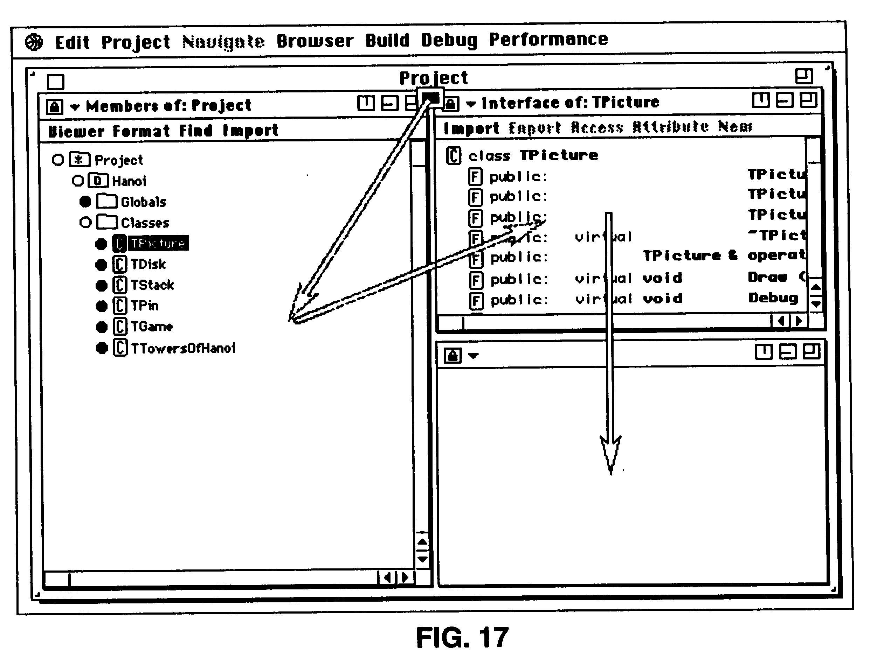

Figure 16 shows the result after the user splits the right pane with the horizontal pane splitter. Figure 17 shows the pane connections. The input of the browser is connected to the input of the left pane. The output of the left pane is connected to the input of the upper right pane. The output of the upper right pane is connected to the input of the lower right pane. Since the output of the upper right pane is a null reference, the lower right pane is blank.

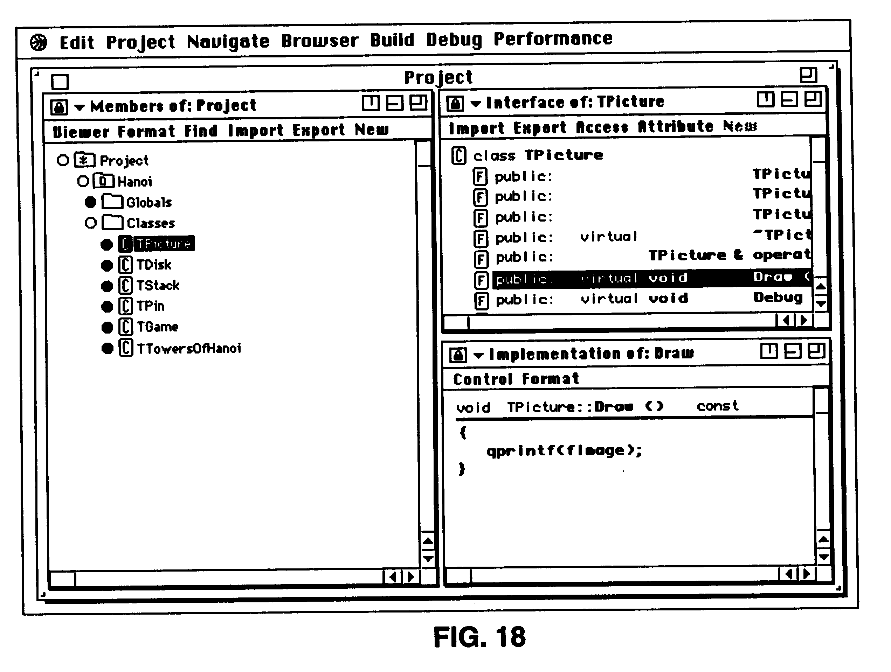

Figure 18 shows the result after selecting the Draw component in the upper right pane. This causes a new output to be generated in the upper right viewer, which is handled by Procedure D. This generates a new input for the lower right pane, which is handled by Procedure C. Because the input does not designate a property, the default property of the Draw component, the Implementation property, is displayed in the lower right pane.

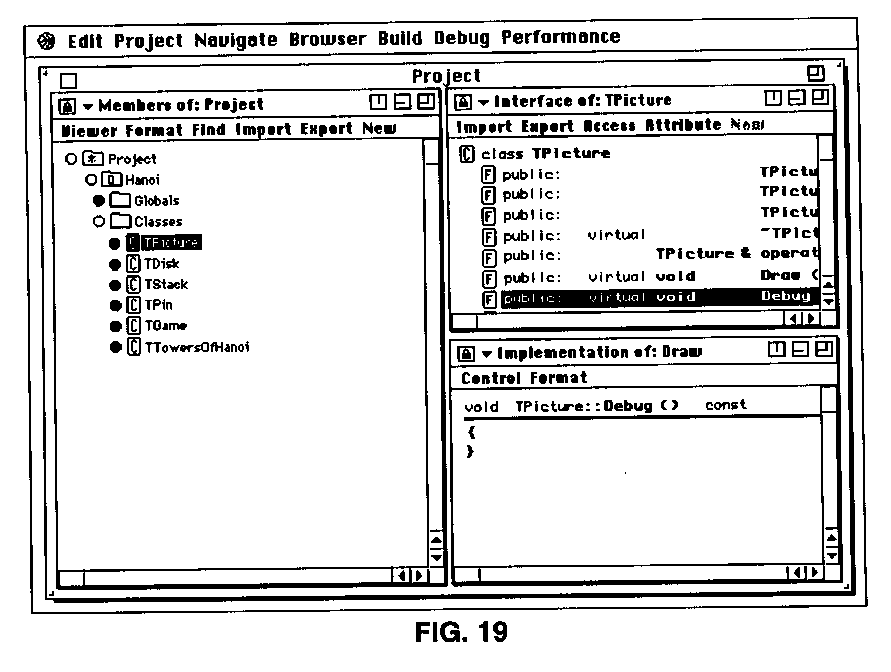

Figure 19 shows the result after selecting the Debug component in the upper right pane, causing a new output to be generated and handled by Procedure D.

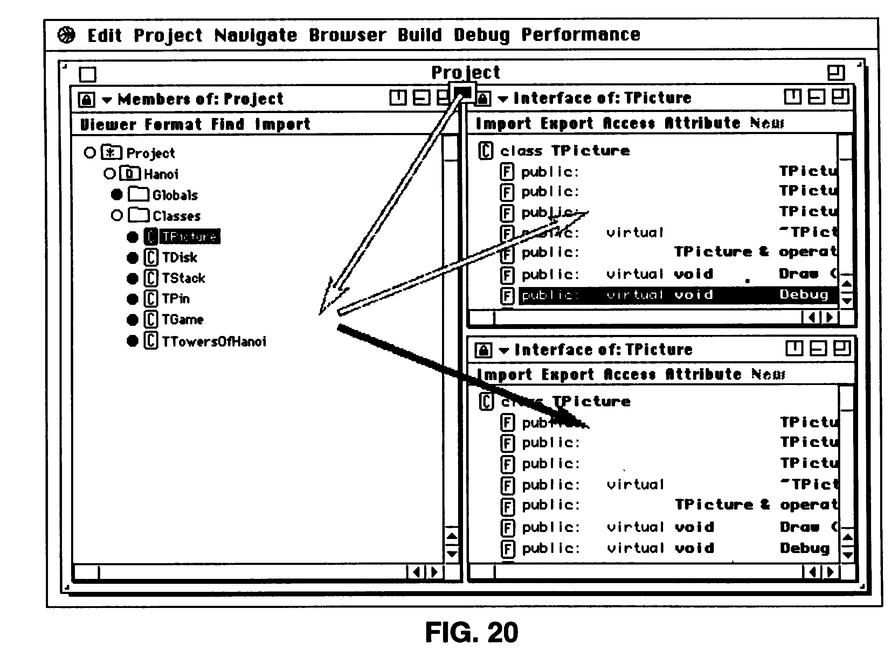

Figure 20 shows the use of the connection controls to connect the output of the left pane to the input of both right panes. Now both right panes receive the same input, in this case a reference to the TPicture component.

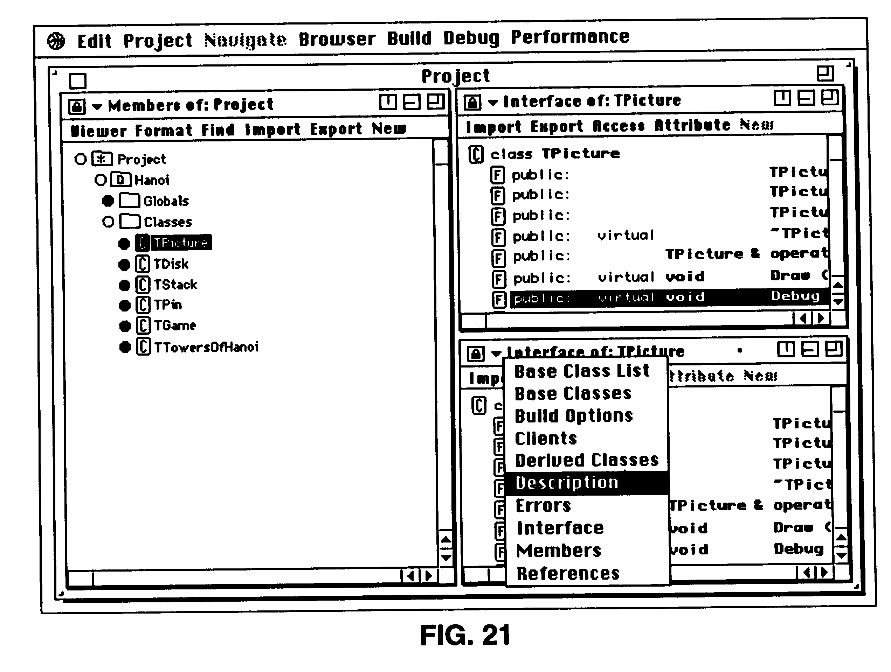

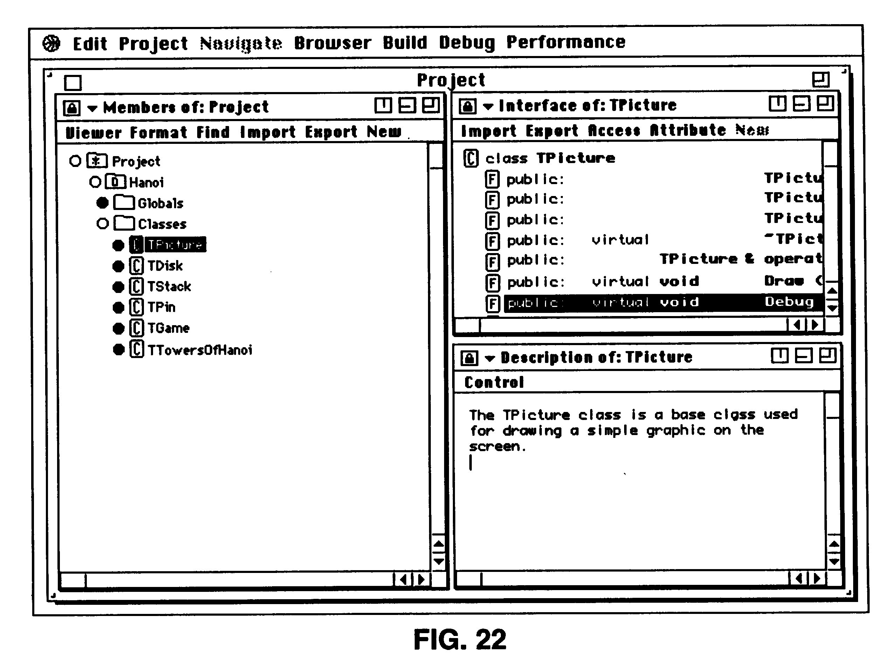

Figure 21 shows the Property menu of lower right pane opened. Figure 22 shows the result after the user selects the Description property from the menu. Both right panes still have the same input, a reference to TPicture. However because a different property was chosen in the lower right pane, each pane displays a different property of TPicture.

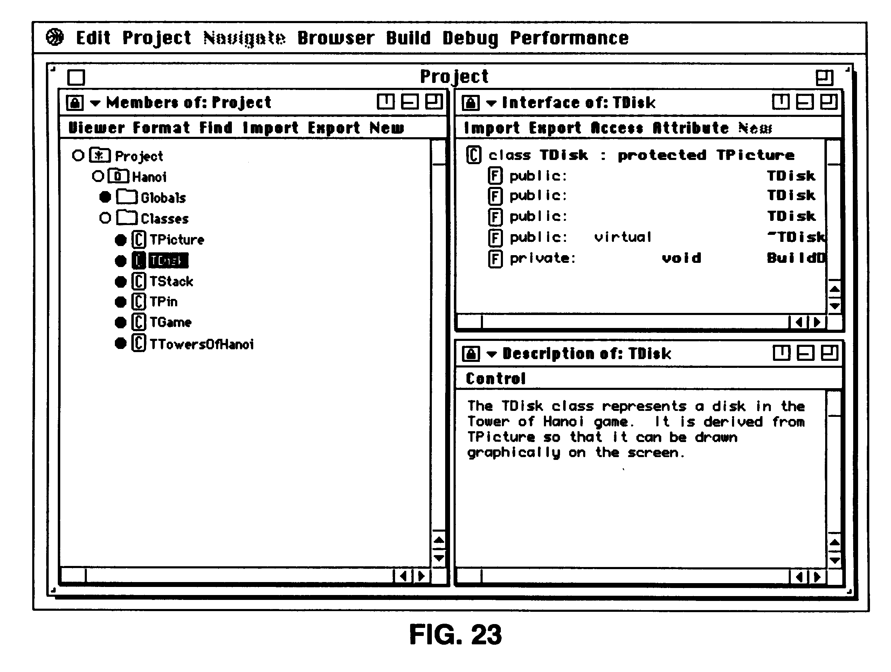

Figure 23 shows the result after the user selects the icon of the TDisk component in the left pane. This causes the left viewer to generate a new output, a reference to TDisk, and Procedure D is invoked, causing the reference to TDisk to be the input of both panes on the right. The upper right pane displays the Interface property of TDisk, and the lower right pane displays the Description property of TDisk.

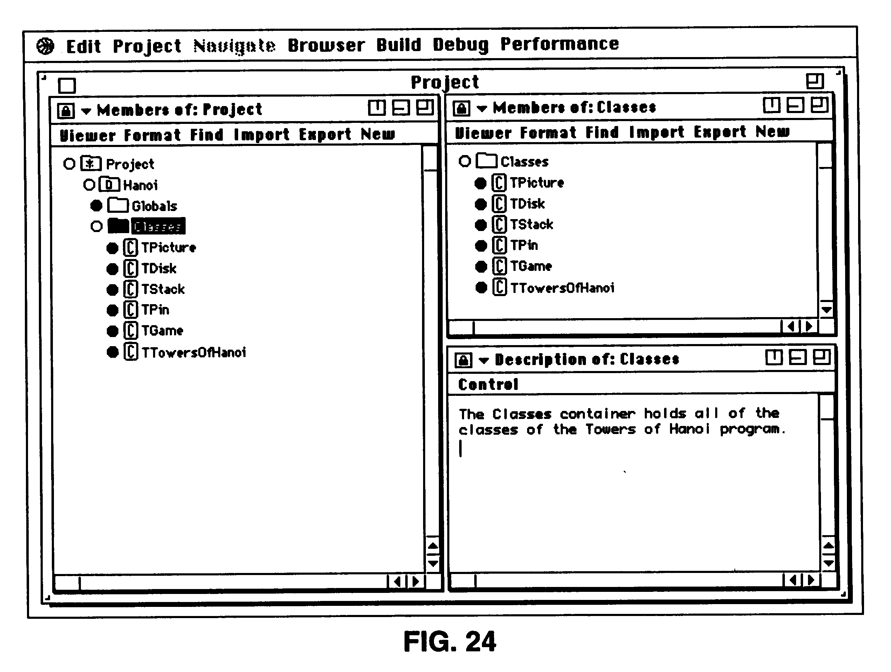

Figure 24 show the result after the user selects icon of the Classes component in the left pane. This causes the left viewer to generate a new output, a reference to Classes, and this reference is fed as the input to both panes on the right. Because the reference does not specify a property, the upper right pane uses the default property of its input, in the case the Members property. The lower right pane displays the Description property because it is locked to that property.

## Claims

1. A method for dynamically browsing a computer program in order to display on a display device (14) program information (1200-1260) represented by a number of panes, the method comprising the steps of:
(a) modeling the computer program as a collection of components (1203), each of the collection of components having property information relating to the component and a reference to another of the collection of components (1230);
(b) storing the components, the property information and the references in a memory (22, 23, 27);
(c) creating a first viewing pane having an input for receiving a reference to a viewed component, displaying on the display device property information of the viewed component and said first viewing pane having an output for generating another component reference (1220);
(d) applying a first component reference to the first viewing pane to access the stored property information, being representable by a second viewing pane, and stored reference of the first component and cause the first viewing pane to display property information from the first component (1203); and
(e) responding to a selection of the displayed property information for applying the stored reference to the first viewing pane output (1220) and connecting the first viewing pane output to the input of one or more further viewing panes, thereby presenting on the display property information of the referenced collection of components in the one or more further viewing panes.

2. The method as recited in claim 1, including the steps of:
(f) creating a second viewing pane having an input for receiving a reference to a viewed component, means for displaying on the display device property information of the viewed component and an output for generating a component reference (1230);
(g) applying the component reference at the first viewing pane output to the second viewing pane input to access the stored property information and stored reference of a second component and to cause the second viewing pane to display property information from the second component (1230-1252).

3. The method as recited in claim 2, wherein the first viewing pane and the second viewing pane can be dynamically sized (1242, 1243, 1250, 1252, 1260).

4. The method as recited in claim 1, wherein the collection of components includes a variable component representing a program variable and the property information for the variable component comprises definition information defining the program variable and wherein step (d) comprises the step of:
(d1) displaying the definition information of the first component (1230).

5. The method as recited in claim 1, wherein the property information for the first component comprises descriptive information describing the first component and wherein step (d) comprises the step of:
(d2) displaying the descriptive information of the first component (1260).

6. The method as recited in claim 1, wherein the property information for the first component comprises information identifying others of the collection of components which are referenced by the first component and wherein step (d) comprises the step of:
(d3) identifying others of the collection of components which are referenced by the first component (1202-1260, Figure 8).

7. A multi-pane system for dynamically browsing a computer program in order to display on a display device (14) program information (1200-1260) in response to display commands from a user, the system comprising:
(a) means controlled by the user for modeling the computer program as a collection of components (1203), each of the collection of components having property information relating to the component and a reference to another of the collection of components (1230);
(b) means controlled by the user for storing the components, the property information and the references in a memory (22, 23, 27);
(c) means responsive to one of the display commands for creating a first viewing pane having an input for receiving a reference to a viewed component, means for displaying on the display device property information of the viewed component and said viewing pane having an output for generating a component reference (1220);
(d) first means responsive to another of the display commands for applying a first component reference to the first viewing pane to access the stored property information, being representable by a second viewing pane, and stored reference of the first component and cause the first viewing pane to display property information from the first component (1203); and
(e) second means responsive to a selection of the displayed property information for applying the stored reference to the first viewing pane output (1220) and connecting the first viewing pane output to the input of one or more further viewing panes, thereby presenting on the display property information of the referenced collection of components in the one or more further viewing panes.

8. The system as recited in claim 7, including:
(f) means responsive to one of the display commands for creating a second viewing pane having an input for receiving a reference to a viewed component, means for displaying on the display device property information of the viewed component and an output for generating a component reference (1230-1251);
(g) means responsive to another of the display commands for applying the component reference at the first viewing pane output to the second viewing pane input to access the stored property information and stored reference of a second component and to cause the second viewing pane to display property information from the second component (1202-1260).

9. The system as recited in claim 8, wherein the first viewing pane and the second viewing pane can be dynamically sized (1260).

10. The system as recited in claim 7, wherein the collection of components includes a variable component representing a program variable and the property information for the variable component comprises definition information defining the program variable and wherein the second applying means comprises means for displaying the definition information of the first component (1230).

11. The system as recited in claim 7, wherein the property information for the first component comprises descriptive information describing the first component and wherein the second applying means comprises means for displaying the descriptive information of the first component (1260).

12. The system as recited in claim 7, wherein the property information for the first component comprises information identifying others of the collection of components which are referenced by the first component and wherein the second applying means comprises means for displaying the information identifying others of the collection of components which are referenced by the first component (1202-1260, Figure 8).

## Patentansprüche

1. Ein Verfahren zum dynamischen Durchblättern eines Computerprogramms zur Anzeige von Programminformation auf einer Anzeigevorrichtung (14), wobei die Programminformation (1200-1260) in einer Anzahl von Fensterabschnitten dargestellt wird, das Verfahren enthält die Schritte:
(a) Modellierung eines Computerprogramms als eine Sammlung von Komponenten (1203), jede Komponente besitzt Eigentumsinformation, die sich auf die Komponente und auf eine Referenz auf eine andere Komponente der Sammlung von Komponenten beziehen (1230);
(b) Speichern der Komponenten, der Eigentumsinformationen und der Referenz in einem Speicher (22, 23, 27);
(c) Erzeugen eines ersten Sichtfensterabschnitts, der einen Eingang zum Empfang einer Referenz auf eine betrachtete Komponente enthält, Anzeigen von Eigentumsinformation der betrachteten Komponente auf der Anzeigevorrichtung, wobei besagter erster Sichtfensterabschnitt einen Ausgang zur Erzeugung einer Referenz auf eine andere Komponente enthält (1220);
(d) Anwenden der Referenz der ersten Komponente auf den ersten Sichtfensterabschnitt zum Zugriff auf gespeicherte Eigentumsinformation, die durch einen zweiten Sichtfensterabschnitt darstellbar ist, und auf die gespeicherte Referenz auf die erste Komponente, und Veranlassen des ersten Sichtfensterabschnitts zur Anzeige von Eigentumsinformation von der ersten Komponente (1203); und
(e) Beantwortung einer Auswahl der angezeigten Eigentumsinformation zur Anwendung der gespeicherten Referenz auf den Ausgang des ersten Sichtfensterabschnitts (1220), und Verbinden des Ausgangs des ersten Sichtfensterabschnitts mit dem Eingang von einem oder mehreren weiteren Sichtfensterabschnitten, wobei auf der Anzeigevorrichtung Eigentumsinformation der durch die Referenz angegebenen Sammlung von Komponenten in dem einen weiteren Sichtfensterabschnitt oder in den mehreren weiteren Sichtfensterabschnitten angezeigt werden.

2. Das Verfahren nach Anspruch 1, enthaltend die Schritte:
(f) Erzeugen eines zweiten Sichtfensterabschnitts, das einen Eingang zum Empfang einer Referenz auf eine betrachtete Komponente aufweist, Mittel zur Anzeige auf der Anzeigevorrichtung von Eigentumsinformation der betrachteten Komponente und ein Ausgang zur Erzeugung einer Referenz auf eine Komponente (1230);
(g) Anwenden der Referenz der Komponente auf den Ausgang des ersten Sichtfensterabschnitts zum Eingang des zweiten Sichtfensterabschnitts für einen Zugriff auf gespeicherte Eigentumsinformation und eine gespeicherte Referenz zu einer zweiten Komponente und Veranlassen des zweiten Sichtfensterabschnitts zur Anzeige von Eigentumsinformation von der zweiten Komponente (1230-1252).

3. Das Verfahren nach Anspruch 2, worin der erste Sichtfensterabschnitt und der zweite Sichtfensterabschnitt in ihrer Größe dynamisch veränderbar sind (1242, 1243, 1250, 1252, 1260).

4. Das Verfahren nach Anspruch 1, worin die Sammlung von Komponenten eine variable Komponente enthält, die eine Programm-Variable darstellt und die Eigentumsinformation für die variable Komponente Definitionsinformation zur Definition der Programm-Variablen aufweist, und worin Schritt (d) den Schritt enthält:
(d1) Anzeige der Definitionsinformation von der ersten Komponente (1230).

5. Das Verfahren nach Anspruch 1, worin die Eigentumsinformation für die erste Komponente beschreibende Information enthält zur Beschreibung der erste Komponente und worin Schritt (d) den Schritt enthält:
(d2) Anzeige der beschreibenden Information von der ersten Komponente (1260).

6. Das Verfahren nach Anspruch 1, worin die Eigentumsinformation für die erste Komponente Information zur Identifizierung anderer Komponenten der Sammlung von Komponenten enthält, die durch die erste Komponente bezeichnet werden, und worin Schritt (d) den Schritt enthält:
(d3) Identifizierung anderer Komponenten der Sammlung von Komponenten, die durch die erste Komponente bezeichnet werden (1202-1260, Figur 8).

7. Ein System mit mehreren Sichtfensterabschnitten zum dynamischen Durchblättern eines Computerprogramms zur Anzeige von Programminformation auf einer Anzeigevorrichtung (14) als Reaktion auf Anzeigekommandos von einem Benutzer, enthaltend:
(a) von einem Benutzer gesteuerte Mittel zur Modellierung eines Computerprogramms als eine Sammlung von Komponenten (1203), jede Komponente besitzt Eigentumsinformation, die sich auf die Komponente und auf eine Referenz auf eine andere Komponente der Sammlung von Komponenten beziehen (1230);
(b) von einem Benutzer gesteuerte Mittel zum Speichern der Komponenten, der Eigentumsinformationen und der Referenz in einem Speicher (22, 23, 27);
(c) Mittel, die auf eines der Benutzerkommandos ansprechen, zum Erzeugen eines ersten Sichtfensterabschnitts, der einen Eingang zum Empfang einer Referenz auf eine betrachtete Komponente enthält, Anzeigen von Eigentumsinformation der betrachteten Komponente auf der Anzeigevorrichtung, wobei besagter erster Sichtfensterabschnitt einen Ausgang zur Erzeugung einer Referenz auf eine andere Komponente enthält (1220);
(d) erste Mittel, die auf ein anderes der Benutzerkommandos ansprechen, zum Anwenden der Referenz der ersten Komponente auf den ersten Sichtfensterabschnitt zum Zugriff auf gespeicherte Eigentumsinformation, die durch einen zweiten Sichtfensterabschnitt darstellbar ist, und auf die gespeicherte Referenz auf die erste Komponente, und Veranlassen des ersten Sichtfensterabschnitts zur Anzeige von Eigentumsinformation von der ersten Komponente (1203); und
(e) zweite Mittel, die auf eine Auswahl von angezeigter Eigentumsinformation ansprechen, zur Anwendung der gespeicherten Referenz auf den Ausgang des ersten Sichtfensterabschnitts (1220), und Verbinden des Ausgangs des ersten Sichtfensterabschnitts mit dem Eingang von einem oder mehreren weiteren Sichtfensterabschnitten, wobei auf der Anzeigevorrichtung Eigentumsinformation der durch die Referenz angegebenen Sammlung von Komponenten in dem einen weiteren Sichtfensterabschnitt oder in den mehreren weiteren Sichtfensterabschnitten angezeigt werden.

8. Das System nach Anspruch 7, enthaltend:
(f) Mittel, die auf eines der Anzeigekommandos ansprechen, zum Erzeugen eines zweiten Sichtfensterabschnitts, das einen Eingang zum Empfang einer Referenz auf eine betrachtete Komponente aufweist, Mittel zur Anzeige auf der Anzeigevorrichtung von Eigentumsinformation der betrachteten Komponente und ein Ausgang zur Erzeugung einer Referenz auf eine Komponente (1230);
(g) Mittel, die auf ein anderes der Benutzerkommandos ansprechen, zum Anwenden der Referenz der Komponente auf den Ausgang des ersten Sichtfensterabschnitts zum Eingang des zweiten Sichtfensterabschnitts für einen Zugriff auf gespeicherte Eigentumsinformation und eine gespeicherte Referenz zu einer zweiten Komponente und Veranlassen des zweiten Sichtfensterabschnitts zur Anzeige von Eigentumsinformation von der zweiten Komponente (1230-1252).

9. Das System nach Anspruch 8, worin der erste Sichtfensterabschnitt und der zweite Sichtfensterabschnitt in ihrer Größe dynamisch veränderbar sind (1242, 1243, 1250, 1252, 1260).

10. Das System nach Anspruch 7, worin die Sammlung von Komponenten eine variable Komponente enthält, die eine Programm-Variable darstellt und die Eigentumsinformation für die variable Komponente Definitionsinformation zur Definition der Programm-Variablen aufweist, und worin die zweiten Anwendungsmittel Mittel enthalten zur Anzeige der Definitionsinformation von der ersten Komponente (1230).

11. Das System nach Anspruch 7, worin die Eigentumsinformation für die erste Komponente beschreibende Information enthält zur Beschreibung der ersten Komponente und worin die zweiten Anwendungsmittel Mittel enthalten zur Anzeige der beschreibenden Information von der ersten Komponente (1260).

12. Das System nach Anspruch 7, worin die Eigentumsinformation für die erste Komponente Information zur Identifizierung anderer Komponenten der Sammlung von Komponenten enthält, die durch die erste Komponente bezeichnet werden, und worin die zweiten Anwendungsmittel Mittel enthalten zur Identifizierung anderer Komponenten der Sammlung von Komponenten, die durch die erste Komponente bezeichnet werden (1202-1260, Figur 8).

## Revendications

1. Méthode pour parcourir un programme d'ordinateur de façon dynamique dans le but d'afficher sur un dispositif d'affichage (14) des informations de programme (1200, 1260) représentées par un certain nombre de fenêtres, la méthode comprenant les étapes de :
a) modéliser le programme d'ordinateur comme une collection de composants (1203), chaque composant de la collection ayant des informations de propriété concernant le composant et une référence à un autre composant de la collection (1230),
b) emmagasiner les composants, les informations de propriété et les références dans une mémoire (22, 23, 27),
c) créer une première fenêtre de visualisation ayant une entrée pour recevoir une référence à un composant visualisé, afficher sur le dispositif d'affichage des informations de propriété du composant visualisé, et ladite première fenêtre de visualisation ayant une sortie pour générer une autre référence de composant (1220).
d) appliquer une première référence de composant à la première fenêtre de visualisation pour accéder aux informations de propriété emmagasinées pouvant être représentée par une seconde fenêtre de visualisation, et à la référence emmagasinée du premier composant, et provoquer l'affichage des informations de propriété par la première fenêtre de visualisation à partir du premier composant (1203), et
e) répondre à une sélection des informations de propriété affichées pour appliquer la référence emmagasinée à la sortie de la première fenêtre de visualisation (1220), et connecter la sortie de la première fenêtre de visualisation à l'entrée d'un ou plusieurs autres fenêtres de visualisation, de façon à présenter sur le dispositif d'affichage des informations de propriété de la collection référencée de composants dans un ou plusieurs des autres fenêtres de visualisation.

2. Méthode telle que définie dans la revendication 1, comprenant les étapes de :
f) créer une seconde fenêtre de visualisation ayant une entrée pour recevoir une référence à un composant visualisé, et afficher sur le dispositif d'affichage des informations de propriété du composant visualisé et une sortie pour générer une référence de composant (1230),
g) appliquer la référence de composant de la sortie de la première fenêtre de visualisation à l'entrée de la seconde fenêtre de visualisation pour accéder aux informations de propriété emmagasinées et à la référence emmagasinée d'un second composant et pour provoquer l'affichage des informations de propriété du second composant par la seconde fenêtre de visualisation (1230-1252).

3. Méthode telle que définie dans la revendication 2, dans laquelle la première fenêtre de visualisation et la seconde fenêtre de visualisation peuvent être ajustées de façon dynamique (1242, 1243, 1252, 1260).

4. Méthode telle que définie dans la revendication 1, dans laquelle la collection de composants comprend un composant variable représentant une variable de programme et les informations de propriété pour le composant variable comprennent des informations de définition définissant la variable de programme et dans laquelle l'étape d) comprend l'étape de :
d1) afficher les informations de définition du premier composant (1230).

5. Méthode telle que définie dans la revendication 1, dans laquelle les informations de propriété pour le premier composant comprennent des informations descriptives décrivant le premier composant et dans laquelle l'étape d) comprend l'étape de :
d2) afficher les informations descriptives du premier composant (1260).

6. Méthode telle que définie dans la revendication 1, dans laquelle les informations de propriété pour le premier composant comprennent des informations d'autres composants de la collection qui sont référencés par le premier composant et dans laquelle l'étape d) comprend l'étape de :
d3) identifier d'autres composants de la collection qui sont référencés par le premier composant (1202-1260, et Figure 8).

7. Système multi-fenêtres pour parcourir un programme d'ordinateur de façon dynamique dans le but d'afficher sur un dispositif d'affichage (14) des informations de programme (1200, 1260) en réponse à des commandes d'affichage provenant d'un utilisateur, le système comprenant :
a) des moyens commandés par l'utilisateur pour modéliser le programme d'ordinateur comme une collection de composants (1203), chaque composant de la collection ayant des informations de propriété concernant le composant et une référence à un autre composant de la collection (1230),
b) des moyens commandés par l'utilisateur pour emmagasiner les composants, les informations de propriété et les références dans une mémoire (22, 23, 27),
c) des moyens sensibles à une des commandes d'affichage pour créer une première fenêtre de visualisation ayant une entrée pour recevoir une référence à un composant visualisé, des moyens pour afficher sur le dispositif d'affichage des informations de propriété du composant visualisé, et ladite première fenêtre de visualisation ayant une sortie pour générer une autre référence de composant (1220).
d) des premier moyens sensibles à une autre commande d'affichage pour appliquer une première référence de composant à la première fenêtre de visualisation pour accéder aux informations de propriété emmagasinées, pouvant être représentée par une seconde fenêtre de visualisation, et à la référence emmagasinée du premier composant, et provoquer l'affichage des informations de propriété par la première fenêtre de visualisation à partir du premier composant (1203), et
e) des seconds moyens sensibles à une sélection des informations de propriété affichées pour appliquer la référence emmagasinée à la sortie de la première fenêtre de visualisation (1220), et connecter la sortie de la première fenêtre de visualisation à l'entrée d'un ou plusieurs autres fenêtres de visualisation, de façon à présenter sur le dispositif d'affichage des informations de propriété de la collection référencée de composants dans un ou plusieurs des autres fenêtres de visualisation.

8. Système tel que défini dans la revendication 7, comprenant :
f) des moyens sensibles à une des commandes d'affichage pour créer une seconde fenêtre de visualisation ayant une entrée pour recevoir une référence à un composant visualisé, des moyens pour afficher sur le dispositif d'affichage des informations de propriété du composant visualisé et une sortie pour générer une référence de composant (1230-1251),
g) des moyens sensibles à une autre commande d'affichage pour appliquer la référence de composant de la sortie de la première fenêtre de visualisation à l'entrée de la seconde fenêtre de visualisation pour accéder aux informations de propriété emmagasinées et à la référence emmagasinée d'un second composant et pour provoquer l'affichage des informations de propriété du second composant par la seconde fenêtre de visualisation (1202-1260).

9. Système tel que défini dans la revendication 8, dans lequel la première fenêtre de visualisation et la seconde fenêtre de visualisation peuvent être ajustées de façon dynamique (1260).

10. Système tel que défini dans la revendication 7, dans lequel la collection de composants comprend un composant variable représentant une variable de programme et les informations de propriété pour le composant variable comprennent des informations de définition définissant la variable de programme et dans lequel les seconds moyens pour appliquer comprennent des moyens pour afficher les informations de définition du premier composant (1230).

11. Système tel que défini dans la revendication 7, dans lequel les informations de propriété pour le premier composant comprennent des informations descriptives décrivant le premier composant et dans lequel les seconds moyens pour appliquer comprennent des moyens pour afficher les informations descriptives du premier composant (1260).

12. Système tel que défini dans la revendication 7, dans lequel les informations de propriété pour le premier composant comprennent des informations identifiant d'autres composants de la collection qui sont référencés par le premier composant et dans lequel les seconds moyens pour appliquer comprennent des moyens pour afficher les informations identifiant d'autres composants de la collection qui sont référencés par le premier composant (1202-1260, et Figure 8).
